# EUROPÄISCHE PATENTSCHRIFT

(11) **EP 0 816 703 B1**
(45) Veröffentlichungstag und Bekanntmachung des Hinweises auf die Patenterteilung: **07.11.2001**
(21) Anmeldenummer: 97109334.9
(22) Anmeldetag: 10.06.1997
(51) Int. Cl.: F16D 3/79

(54) **Konusschraubverbindung für Lamellenpaket-Wellenkupplungen**
Conical screw connection for lamellae shaft coupling
Raccord fileté conique utilisé dans les accouplements d'arbres à pièce d'accouplement formée de disques métalliques

(30) Priorität: 25.06.1996 DE 19625318
(43) Veröffentlichungstag der Anmeldung: 07.01.1998
(73) Patentinhaber: ATEC-Weiss GmbH & Co. KG, D-48691 Vreden (DE)
(72) Erfinder: Weiss, Rudolf, 48691 Vreden (DE)
(74) Vertreter: Cohausz & Florack

(56) Entgegenhaltungen:
- EP-A- 0 184 051
- WO-A-85/05413
- CH-A- 332 932
- DE-C- 3 822 207

## Beschreibung

Die vorliegende Erfindung betrifft eine Konusschraubverbindung für Lamellenpaket-Wellenkupplungen, umfassend einen Spannbolzen und eine erste Spannbüchse, die eine zweite Spannbüchse trägt, wobei der Sitz zwischen der ersten Spannbüchse und dem Spannbolzen konisch und der Sitz zwischen der ersten Spannbüchse und der zweiten Spannbüchse zylindrisch ausgebildet ist, und wobei der Spannbolzen und die erste Spannbüchse einen ringförmigen Spalt bilden, dessen Breite proportional dem Aufziehmaß der Konusschraubverbindung ist.

Aus der DE 34 43 485 C2 ist eine flexible Ganzstahl-Wellenkupplung bekannt, die einen Anschlußflansch für jede der beiden Kupplungshälften und einen zwischen und mit axialem Abstand von den beiden Anschlußflanschen angeordneten und mit Spannbolzen in Umfangsrichtung wechselweise mit dem einen oder anderen Anschlußflansch verbundenen federelastischen Lamellenpaketkranz aufweist. Der Lamellenpaketkranz sitzt auf Spannbüchsen der Spannbolzen und ist zwischen Spannringen zusammen mit dem Anschlußflansch verspannt. Der Sitz zwischen den Spannbüchsen und dem jeweiligen Spannbolzen ist konisch ausgebildet, wobei die axialen Abmessungen des Lamellenpaketkranzes, der Spannringe sowie der konischen Sitze derart aufeinander abgestimmt sind, daß durch die axiale Spannkraft des Spannbolzens der an den Einspannstellen unter axialer Vorspannung stehende Lamellenpaketkranz im Sitz der wegen des konischen Sitzes beim Vorspannen aufgeweiteten Spannbüchsen zusätzlich unter radialer Vorspannung steht. Diese Wellenkupplung hat sich in der Praxis vielfach bewährt.

Aus der CH-A-332 932 ist eine Konusschraubverbindung der eingangs genannten Art bekannt, die allerdings nicht für Lamellenpaket-Wellenkupplungen bestimmt ist, sondern der torsionsfesten und lösbaren Verbindung von Lagerzapfen mit Metallinnenhülsen von Gummilagerbüchsen dient. Der Spannbolzen und die erste Spannbüchse dieser bekannten Konusschraubverbindung bilden zwar einen ringförmigen Spalt, dessen Breite proportional dem Aufziehmaß der Konusschraubverbindung ist, jedoch läßt sich das Aufziehmaß anhand der Spaltbreite nicht kontrollieren, da der Spalt unzugänglich angeordnet und zudem durch die zweite Spannbüchse, welche auf der ersten Spannbüchse sitzt, verdeckt ist.

Aufgabe der vorliegenden Erfindung ist es, eine Konusschraubverbindung bereitzustellen, die in vorhandene Lamellenpaket-Wellenkupplungen mit zylindrischen Bohrungen in Lamellenpaket und Anschlußflansch anstelle einer herkömmlichen zylindrischen Paßschraubverbindungen eingebaut werden kann und eine schnelle und einfache Kontrolle des eingestellten Aufziehmaßes ermöglicht.

Diese Aufgabe wird durch eine Konusschraubverbindung der eingangs genannten Art gelöst, bei der die zweite Spannbüchse einen Kragen aufweist und in Verbindung mit einem Spannring geeignet ist, ein Lamellenpaket in axialer Richtung formschlüssig zu fixieren, und bei der die erste Spannbüchse mit einem Kragen versehen ist, der einem Bolzenkopf des Spannbolzens zugewandt ist und mit diesem vor dem Aufziehen den ringförmigen Spalt bildet, wobei das Aufziehmaß anhand der Spaltbreite kontrollierbar ist.

Mit der erfindungsgemäßen Konusschraubverbindung läßt sich ein Lamellenpaket aufgrund der zweiten Spannbüchse genauer zentrieren als mit der Konusschraubverbindung der aus der DE 34 43 485 C2 bekannten Ganzstahl-Wellenkupplung. Der durch den Spannbolzen und die Zwischenhülse gebildete ringförmige Spalt ermöglicht ein genaues, definiertes Anziehen der Schraubverbindung. Das Aufziehmaß läßt sich damit schnell und eindeutig kontrollieren. Vorteilhaft ist ferner, daß das Lamellenpaket auf der zweiten Spannbüchse mit dem Spannring formschlüssig vorgespannt ist. Hierdurch werden Kleinstbewegungen der Lamellen weitgehend verhindert.

Eine vorteilhafte Ausgestaltung der erfindungsgemäßen Konusschraubverbindung besteht darin, daß die erste Spannbüchse an dem ihrem Kragen gegenüberliegenden Ende ein Außengewinde mit einer ein Lamellenpaket axial einspannenden Mutter aufweist, während der Spannbolzen an dem dem Bolzenkopf gegenüberliegenden Ende eine Gewindebohrung mit einer Schraube aufweist, mittels der die Spannbüchse radial aufweitbar ist.

Diese Ausführungsvariante zeichnet sich dadurch aus, daß die axiale Einspannung und die radiale Zentrierung des Lamellenpakets getrennt erfolgen können. Hierdurch läßt sich eine optimale Versteifung des Schraubpunktes unter Ausgleich aller Fertigungstolerahzen erzielen.

Weitere bevorzugte Ausgestaltungen der Erfindung sind in den Unteransprüchen gekennzeichnet.

Nachstehend wird die Erfindung anhand mehrerer Ausführungsbeispiele und mit Bezug auf die beiliegende Zeichnung näher erläutert.

Es zeigen:
- Fig. 1: eine Seitenansicht auf die obere Hälfte einer im Längsschnitt und seitlich gebrochen dargestellten Ganzstahl-Wellenkupplung mit einer erfindungsgemäßen Konusschraubverbindung, wobei oberhalb der Längsachse der Schraubverbindung die Lage des Spannbolzens vor dem Aufziehen und unterhalb dieser Längsachse die Lage des Spannbolzens nach dem Aufziehen gezeigt ist;
- Fig. 2: eine Längsschnittansicht einer zweiten Ausführungsform einer erfindungsgemäßen Konusschraubverbindung;
- Fig. 3: eine Stirnseitenansicht des Spannbolzenkopfes der Konusschraubverbindung gemäß Fig. 2;
- Fig. 4: eine Stirnseitenansicht auf das dem Spannbolzenkopf gegenüberliegende Ende der Konusschraubverbindung gemäß Fig. 2; und
- Fig. 5: eine Längsschnittansicht einer dritten Ausführungsvariante.

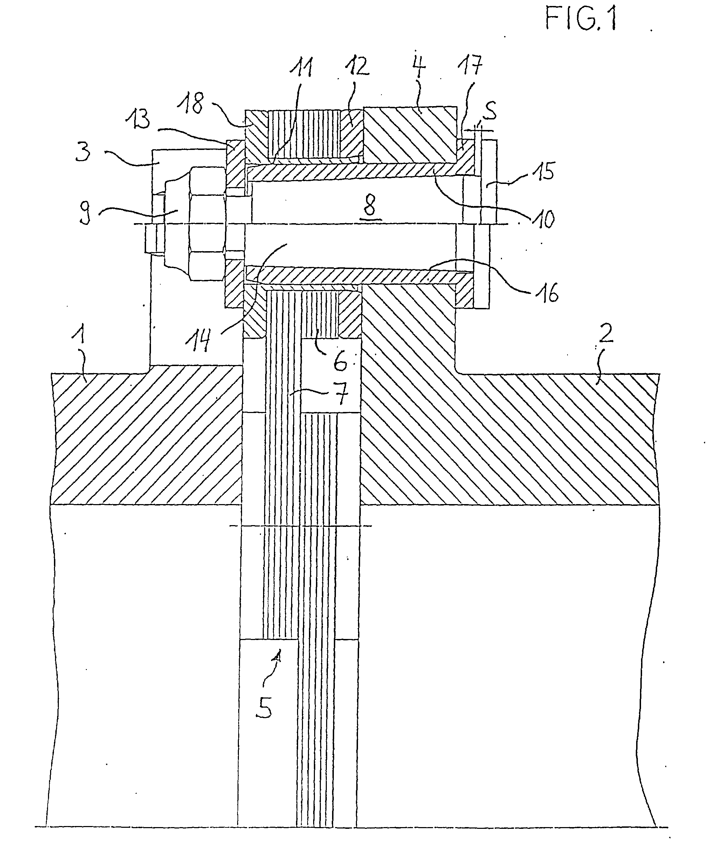

Die in Fig. 1 dargestellte Ganzstahl-Wellenkupplung verbindet zwei Kupplungsteile 1, 2, an denen Anschlußflansche 3, 4 ausgebildet sind. Zwischen den beiden Anschlußflanschen 3, 4 ist mit axialem Abstand ein federelastischer Lamellenpaketkranz 5 angeordnet, der sich aus einzelnen Lamellenpaketen 6, 7 zusammensetzt. Der Lamellenpaketkranz 5 ist mittels einer Konusschraubverbindung wechselweise an dem einen oder anderen Flansch 3, 4 befestigt.

Die Konusschraubverbindung umfaßt einen Spannbolzen 8, eine Bolzenmutter 9, eine erste Spannbüchse 10, eine zweite Spannbüchse 11, einen Spannring 12 und einen Distanzring 13. Der Spannbolzen 8 weist einen konischen Schaft 14 und einen zylindrischen Kopf 15 auf. Die Spannbüchse 10 hat eine konische Bohrung 16 und sitzt auf dem konischen Schaft 14 des Spannbolzens 8. Außen weist die Spannbüchse 10 eine zylindrische Mantelfläche auf. Ferner ist sie mit einem zylindrischen Kragen 17 versehen, der dem zylindrischen Bolzenkopf 15 zugewandt ist und mit diesem vor dem Aufziehen einen ringförmigen Spalt S bildet.

Die am gegenüberliegenden Ende angeordnete zweite Spannbüchse 11 weist eine zylindrische Bohrung auf, so daß sie auf der Spannbüchse 10 axial verschiebbar ist. Außen besitzt die zweite Spannbüchse 11 ebenfalls eine zylindrische Mantelfläche. Sie ist ferner mit einem zylindrischen Kragen 18 versehen, der in Verbindung mit dem Spannring 12 zwei Lamellenpakete in axialer Richtung formschlüssig vorspannt. Hierzu ist der Spannring 12 mit einer konischen Bohrung versehen, in die das dem Kragen 18 gegenüberliegende Ende der Spannbüchse 11 aufgeweitet eingreift. Wie in der Zeichnung zu erkennen ist, liegt der Spannring 12 direkt an dem Anschlußflansch 4 des Kupplungsteils 2 an, während die Spannbüchse 11 mit Spiel vor dem Anschlußflansch 4 endet.

Durch Anziehen der Bolzenmutter 9, die sich über den Distanzring 13 am Kragen 18 der zweiten Spannbüchse 11 abstützt, wird eine weitere axiale Einspannung der Lamellenpakete 6, 7 und eine radiale Aufweitung beider Spannbüchsen 10, 11 bewirkt. Auf diese Weise wird der zylindrische Sitz in der Flansch- sowie der Lamellenpaketbohrung radial zentriert, wobei die fertigungsbedingten Toleranzen durch elastische Verformung vollständig ausgeglichen werden. Das maximale Aufziehmaß ist durch den ringförmigen Spalt S zwischen Bolzenkopf 15 und Spannbüchsenkragen 17 definiert. Das tatsächliche Aufziehmaß läßt sich anhand der Spaltbreite kontrollieren.

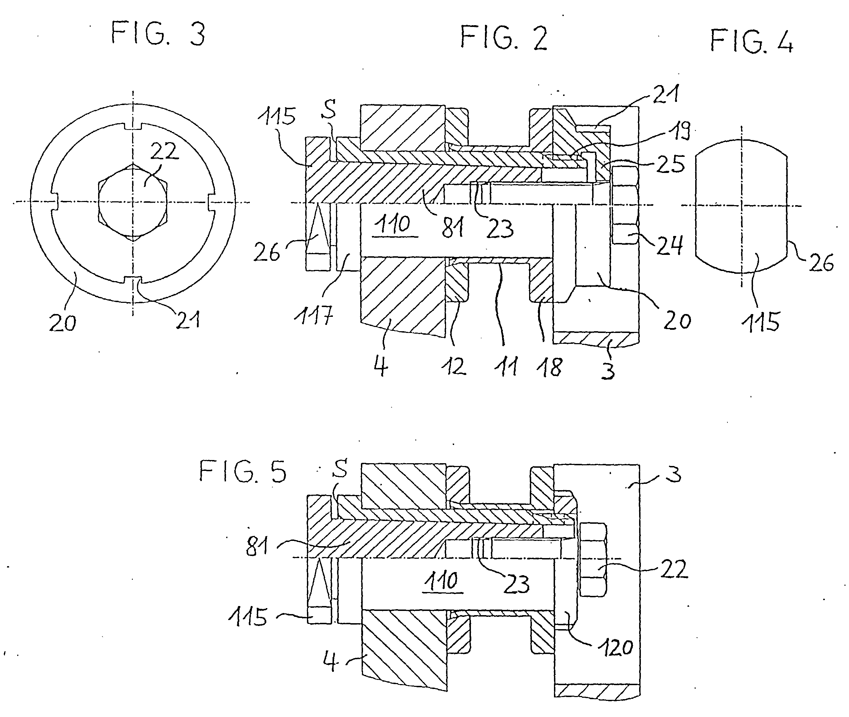

Das in den Figuren 2 bis 4 dargestellte Ausführungsbeispiel unterscheidet sich von dem Ausführungsbeispiel der Fig. 1 insbesondere dadurch, daß die auf dem Spannbolzen 81 sitzende Spannbüchse 110 an dem dem Kragen 117 gegenüberliegenden Ende mit einem Außengewinde 19 versehen ist, auf dem eine Mutter 20 aufgeschraubt ist, die außen mit diametral gegenüberliegende Nuten 21 versehen ist. Mittels dieser Mutter ist das durch die zweite Spannbüchse 11 und den Spannring 12 vorgespannte Lamellenpaket (nicht gezeigt) unabhängig von dem Spannbolzen 81 axial einspannbar.

Ferner wird der Spannbolzen 81 nicht wie in dem Ausführungsbeispiel gemäß Fig. 1 mittels einer Bolzenmutter, sondern mittels einer Schraube 22 in die Spannbüchse 110 eingezogen. Der Spannbolzen 81 weist dementsprechend eine Gewindebohrung 23 auf, in welche die Schraube 22 eingedreht wird. Der Kopf 24 der Schraube 22 stützt sich dabei an der Mutter 20 ab, an der als Widerlager eine Schulter 25 ausgebildet ist. Zum Festhalten des Spannbolzens 81 beim Eindrehen der Schraube 22 weist dessen Kopf 115 zwei parallel verlaufende Abflachungen 26 auf.

Fig. 5 zeigt eine dritte Ausführungsvariante. Diese unterscheidet sich von der Variante gemäß Fig. 2 lediglich dadurch, daß die Mutter 120 in diesem Fall keine Schulter aufweist und der Kopf der Schraube 22 direkt an der Spannbüchse 110 stirnseitig abgestützt ist.

### Bezugszeichenliste

- 1: Kupplungsteil
- 2: weiteres Kupplungsteil
- 3: Anschlußflansch
- 4: Anschlußflansch
- 5: Lamellenpaketkranz
- 6: Lamellenpaket
- 7: Lamellenpaket
- 8: Spannbolzen
- 9: Bolzenmutter
- 10: erste Spannbüchse
- 11: zweite Spannbüchse
- 12: Spannring
- 13: Distanzring
- 14: konischer Bolzenschaft
- 15: Bolzenkopf
- 16: konische Bohrung
- 17: Kragen
- 18: Kragen
- 19: Außengewinde
- 20: Mutter
- 21: Nuten
- 22: Schraube
- 23: Gewindebohrung
- 24: Schraubenkopf
- 25: Schulter
- 26: Abflachung
- 81: Spannbolzen
- 110: Spannbüchse
- 115: Bolzenkopf
- 117: Kragen
- 120: Mutter

## Patentansprüche

1. Konusschraubverbindung für eine Lamellenpaket-Wellenkupplung, umfassend einen Spannbolzen (8, 81) und eine erste Spannbüchse (10, 110), die eine zweite Spannbüchse (11) trägt, wobei der Sitz zwischen der ersten Spannbüchse und dem Spannbolzen konisch und der Sitz zwischen der ersten Spannbüchse und der zweiten Spannbüchse zylindrisch ausgebildet ist, und wobei der Spannbolzen und die erste Spannbüchse einen ringförmigen Spalt (S) bilden, dessen Breite proportional dem Aufziehmaß der Konusschraubverbindung ist,
**dadurch gekennzeichnet, daß** die zweite Spannbüchse (11) einen Kragen (18) aufweist und in Verbindung mit einem Spannring (12) geeignet ist, ein Lamellenpaket (6, 7) in axialer Richtung formschlüssig zu fixieren, und daß die erste Spannbüchse (10, 110) mit einem Kragen (17, 117) versehen ist, der einem Bolzenkopf (15, 115) des Spannbolzens (8, 81) zugewandt ist und mit diesem vor dem Aufziehen den ringförmigen Spalt (S) bildet, wobei das Aufziehmaß anhand der Spaltbreite kontrollierbar ist.

2. Konusschraubverbindung nach Anspruch 1,
**dadurch gekennzeichnet, daß** die erste Spannbüchse (110) an dem ihrem Kragen (17, 117) gegenüberliegenden Ende ein Außengewinde (19) mit einer ein Lamellenpaket axial einspannenden Mutter (20) aufweist, während der Spannbolzen (81) an dem dem Bolzenkopf (115) gegenüberliegenden Ende eine Gewindebohrung (23) mit einer Schraube (22) aufweist, mittels der die Spannbüchse (110) radial aufweitbar ist.

3. Konusschraubverbindung nach Anspruch 2,
**dadurch gekennzeichnet, daß** die Mutter (20) ein Widerlager für den Kopf (24) der Schraube (22) aufweist.

4. Konusschraubverbindung nach Anspruch 2 oder 3,
**dadurch gekennzeichnet, daß** die Mutter (20) außenseitig mit diametral gegenüberliegenden Nuten (21) versehen ist.

5. Konusschraubverbindung nach einem der vorangehenden Ansprüche,
**dadurch gekennzeichnet, daß** der Kopf (115) des Spannbolzens (81) außenseitig zwei im wesentlichen parallel verlaufende Abflachungen (26) aufweist.

## Claims

1. A cone bolt-connection for a multi-disc shaft coupling, comprising a clamping bolt (8, 81) and a first clamping sleeve (10, 110) carrying a second clamping sleeve (11), whereby the seat between the first clamping sleeve and the clamping bolt is conically shaped and the seat between the first clamping sleeve and the second clamping sleeve is cylindrically shaped, and whereby the clamping bolt and the first clamping sleeve form an annular gap (S) whose width is proportional to the tightening measure of the cone bolt-connection, **characterized in that** the second clamping sleeve (11) has a collar (18) and is capable in conjunction with a clamping ring (12) of positively fixing a disc packet (6, 7) in axial direction, and **in that** the first clamping sleeve (10, 110) is provided with a collar (17, 117) facing a bolt head (15, 115) and, prior to tightening, forming therewith the annular gap (S), whereby the tightening measure is controllable by means of the gap width.

2. A cone bolt-connection according to claim 1, **characterized in that** the first clamping sleeve (110) comprises at its end opposing the collar an exterior thread (19) with a nut (20) axially clamping a disc packet, while the clamping bolt (81) comprises at the end opposing the bolt head (115) a threaded borehole (23) with a bolt (22), by means of which the clamping sleeve (110) can be opened out radially.

3. A cone bolt-connection according to claim 2, **characterized in that** the nut (20) comprises an abutment for the head (24) of the bolt (22).

4. A cone bolt-connection according to claim 2 or 3, **characterized in that** the nut (20) is provided on the outside with diametrically opposed grooves (21).

5. A cone bolt-connection according to one of the preceding claims, **characterized in that** the head (115) of the clamping bolt (81), on the outside comprises two essentially parallel flattened areas (26).

## Revendications

1. Raccord fileté conique pour un accouplement d'arbres à paquets de disques, comprenant un boulon de serrage (8, 81) et une première douille de serrage (10, 110), qui porte une seconde douille de serrage (11), et dans lequel le siège entre la première douille de serrage et le boulon de serrage possède une forme conique et le siège entre la première douille de serrage et la seconde douille de serrage possède une forme cylindrique, et dans lequel le boulon de serrage et la première douille de serrage définissent une fente annulaire (S), dont la largeur est proportionnelle au degré de serrage du raccord fileté conique,
**caractérisé en ce que** la seconde douille de serrage (11) possède un collet (18) et convient, en association avec une bague de serrage (12), pour fixer un paquet de disques (6, 7) selon une liaison par formes complémentaires dans une direction axiale, et que la première douille de serrage (10, 110) comporte un collet (17, 117) qui est tourné vers une tête (15, 115) du boulon de serrage (8, 81) et forme avec ce dernier avant le serrage, la fente annulaire (S), le degré de serrage pouvant être contrôlé en référence à la largeur de la fente.

2. Raccord fileté conique selon la revendication 1, **caractérisé en ce que** la première douille de serrage (110) comporte, sur son extrémité située à l'opposé de son collet (17, 117), un filetage extérieur (19) comportant un écrou (20) qui serre axialement un paquet de disques, tandis que le boulon de serrage (81) comporte, sur son extrémité située à l'opposé de la tête (115) du boulon, un perçage taraudé (23) comportant une vis (22), au moyen de laquelle la douille de serrage (110) peut être élargie radialement.

3. Raccord fileté conique selon la revendication 2, **caractérisé en ce que** l'écrou (20) comporte un palier pour la tête (24) de la vis (22).

4. Raccord fileté conique selon la revendication 2 ou 3, **caractérisé en ce que** l'écrou (20) comporte, sur le côté extérieur, des rainures diamétralement opposées (21).

5. Raccord fileté conique selon l'une des revendications précédentes, **caractérisé en ce que** la tête (115) du boulon de serrage (81) possède, sur le côté extérieur, deux méplats (26) qui sont sensiblement parallèles.
